# EUROPÄISCHE PATENTSCHRIFT

(11) **EP 0 893 238 B1**
(45) Veröffentlichungstag und Bekanntmachung des Hinweises auf die Patenterteilung: **11.09.2002**
(21) Anmeldenummer: 98109957.5
(22) Anmeldetag: 02.06.1998
(51) Int. Cl.: B29D 31/508, A43B 3/10, A43B 9/18

(54) **Verfahren zum Versehen eines Schuhs mit einer Sohle aus Latex-material**
Method for providing a shoe with a latex sole
Procédé pour le revêtement d'une chaussure avec une semelle en latex

(30) Priorität: 25.07.1997 AT 127097; 26.08.1997 AT 143797
(43) Veröffentlichungstag der Anmeldung: 27.01.1999
(73) Patentinhaber: Giesswein, Hannes, 6230 Brixlegg (AT); Giesswein, Werner, 6230 Brixlegg (AT)
(72) Erfinder: Giesswein, Hannes, 6230 Brixlegg (AT); Giesswein, Werner, 6230 Brixlegg (AT)
(74) Vertreter: Torggler, Paul Norbert, Dr.

(56) Entgegenhaltungen:
- GB-A- 992 783
- US-A- 2 538 673

## Beschreibung

Die Erfindung betrifft ein Verfahren zum Versehen eines Schuhs, der zumindest teilweise aus einem textilen Material besteht, mit einer Sohle aus Latexmaterial entsprechend dem Oberbegriff des Patentanspruches 1 sowie einen textilen Schuh, dessen Ober- und Untermaterial ein textiles Material ist und dessen textiles Untermaterial mit einem Latexmaterial versehen ist, gemäß dem Oberbegriff des Patentanspruchs 8.

Aus der US 2,538,673 (Donahue) ist die Verwendung von Latexmaterial bei Schuhen bereits lange bekannt. Bei herkömmlichen Tauchverfahren, mit denen die Unterseite eines aus textilem Material bestehenden Schuhs, insbesondere Hausschuhs mit einem Latexmaterial versehen wird, läßt man nach dem Eintauchen der Unterseite des Schuhs in ein Bad aus flüssigem Latex das in das Material des Schuhs eingesaugte sowie an der Oberfläche des Schuhmaterials anhaftende Latexmaterial in der Folge aushärten. Dadurch erhält man eine rutschfeste und wasserabweisende Sohle. Die Latexbeschichtung des textilen Untermaterials des Schuhs ist allerdings sehr dünn. Es wird keine durchgehende Latexschicht ausgebildet, sondern das an der Oberfläche liegende textile Material des Schuhs wird lediglich mit Latex beschichtet. Die Schuhsohle weist daher auch eine rauhe Oberfläche mit der Oberflächenstruktur des textilen Materials des Schuhs auf.

Zur Ausbildung einer demgegenüber dickeren Latexsohle ist mehrmaliges Eintauchen und Aushärten lassen aber, ganz abgesehen vom Produktionsaufwand, nicht geeignet, da dies zu sehr ungleichmäßigen und damit unzweckmäßig und auch optisch unansehnlichen Sohlenunterseiten führt.

Bei einem anderen bekannten textilen Schuh wird daher eine vorgefertigte Kunststoffsohle auf den Schuh aufgenäht. Dieses Verfahren ist viel aufwendiger in der Produktion als das beschriebene Tauchverfahren. Auch sind die vorgefertigten Sohlen sehr dick (da das Gießen der Sohlen eine Mindestdicke von 4 mm erfordert) und daher unflexibel, wodurch der Tragekomfort verringert wird. Schließlich ist die Verbindung der Sohle mit dem Schuh weniger dauerhaft und die Sohle kann sich im Laufe der Verwendung des Schuhs vom Schuh ablösen.

Aus der GB 992 783 ist weiters ein Verfahren bekannt, bei dem der Schuh in eine eine flüssige Kunststoffmischung (PVC-Plastisole) enthaltende Wanne eingetaucht wird. Dabei wird die Temperatur der Wanne bis zur vollständigen Plastifizierung der Kunststoffmischung stetig erhöht. Bedingt durch den großen Produktionsaufwand stellt dieses Verfahren eine sehr kostenintensive Lösung dar.

Aufgabe der Erfindung ist es, ein gegenüber den bekannten Tauchverfahren verbessertes Verfahren zum Versehen eines textilen Schuhs mit einer Sohle aus Latexmaterial bereitzustellen, durch welches diese Nachteile überwunden werden.

Erfindungsgemäß gelingt dies durch ein Verfahren mit den Merkmalen des Anspruches 1. Gegenstand der Erfindung ist weiters ein textiler Schuh mit den Merkmalen des Anspruches 8.

Vorteilhafte Weiter bildungen der Erfindung sind Gegenstand der Betreffenden abhängegen Ansprüche.

Die Sohle eines mit dem erfindungsgemäßen Verfahren hergestellten Schuhs unterscheidet sich gravierend von einer mit dem herkömmlichen Tauchverfahren hergestellten Latexbeschichtung. Durch die Vorvulkanisierung ist die Sohle einerseits wesentlich dicker als der bei der Tauchbeschichtung gebildete Latexüberzug und weist eine durchgehende Latexschicht auf, d.h. eine Schicht aus Latexmaterial, in die das vorzugsweise textile Untermaterial des Schuhs nicht hineinreicht. Weiters ist die Unterseite der vorvulkanisierten Latexsohle im Gegensatz zu der im Tauchverfahren hergestellten Latexbeschichtung des Untermaterials des Schuhs nicht durch die Oberflächenstruktur des darunterliegenden Materials geprägt, sondern weist eine davon unabhängige Oberfläche auf, die definiert reproduzierbar ist. Diese Oberfläche kann zwar im wesentlichen regelmäßige kleine Erhöhungen und Vertiefungen bzw. auch ein aufgeprägtes Profil aufweisen, die Oberfläche dieser Strukturen selbst ist aber im wesentlichen glatt. Da die erfindungsgemäße Latexsohle weiters ebenso wie die im Tauchverfahren erzeugte Latexbeschichtung innig mit dem Untermaterial des Schuhs verbunden ist, kann es zu keiner Ablösung der Sohle vom Schuh im Laufe seiner Verwendung kommen.

In einem bevorzugten Ausführungsbeispiel der Erfindung kann vor der Vorvulkanisation der Unterseite des Latexmaterials das Untermaterial des Schuhs in das flüssige Latexmaterial eingetaucht werden. Dabei ist es günstig, wenn die beheizte Kontaktfläche die Oberfläche einer Walze ist, über die bzw. die über das mit dem flüssigen Latexmaterial versehene Untermaterial des Schuhs abgerollt wird.

Das Verfahren der Erfindung eignet sich insbesondere, um textile Hausschuhe mit Sohlen aus einem Latexmaterial zu versehen.

Verfahren zum Versehen von Schuhen mit zweischichtigen Sohlen, die neben der Laufsohle eine geschäumte Zwischensohle aufweisen, sind aus der DE-OS 36 16 874 und der US-PS 5,032,330 bekannt. Bei diesen wird die Unterseite des unbesohlten Schuhs in Abstand zu einer bereits in einem vorhergehenden Arbeitsgang vulkanisierten Laufsohle gebracht und der Zwischenraum unter Ausbildung einer Zwischensohle ausgeschäumt. Durch dieses Verfahren werden Schuhe bereitgestellt, die ganz anderen Anforderungen zu genügen haben, wobei die so hergestellten Sohlen, besonders für textile Hausschuhe viel zu aufwendig sind. Weiters wird im Gegensatz zum Verfahren der Erfindung bei diesem Verfahren auf die Unterseite des Schuhs kein flüssiges, unvulkanisiertes Latexmaterial aufgebracht. Durch dieses Merkmal der Erfindung wird aber eine besonders innige Verbindung der Latexsohle mit dem Untermaterial des Schuhs erreicht und eine Ablösung der Sohle vom Untermaterial praktisch ausgeschlossen.

Weitere Vorteile und Einzelheiten der Erfindung werden im folgenden anhand der beiliegenden Zeichnung erläutert.

In dieser zeigt:
Fig. 1 eine Seitenansicht eines erfindungsgemäßen Schuhs,
Fig. 2 einen Längsschnitt des Schuhs der Fig. 1,
Fig. 3 eine vergrößerte Teildarstellung eines Querschnitts des Schuhs von Fig. 1 entlang der Linie A-A von Fig. 2 und
Fig. 4 eine schematische Darstellung einer Walze zur Durchführung des erfindungsgemäßen Verfahrens.

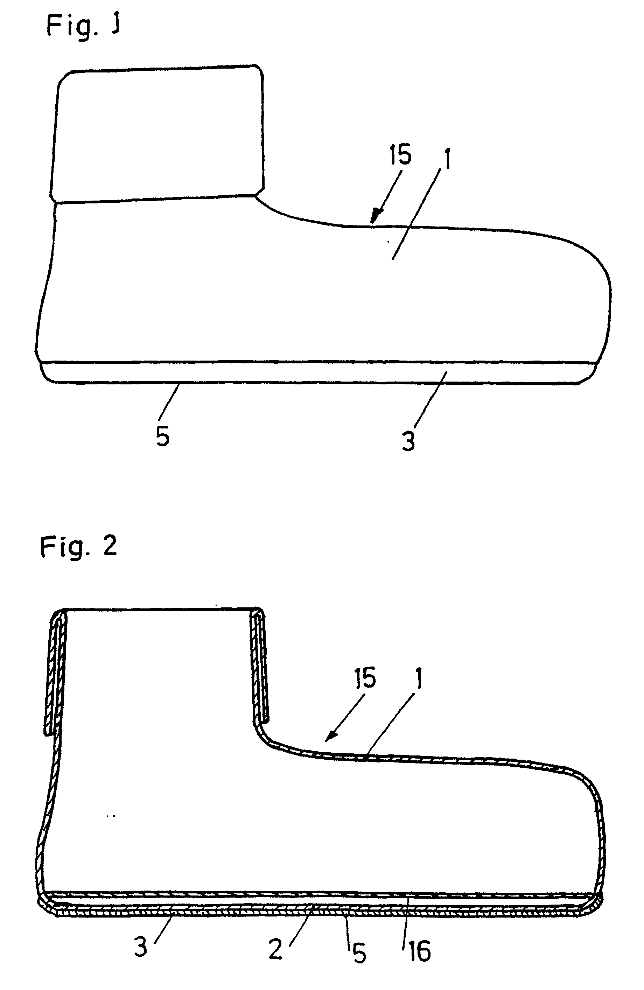

Der in den Fig. 1 bis 3 dargestellte erfindungsgemäße Schuh 15 weist als Obermaterial 1 und als Untermaterial 2, welches im Sohlenbereich des Schuhs 15 angeordne ist, ein textiles Material auf. Weiters weist der Schuh ein textiles Innenmaterial 16 auf, welches eine Innensohle bildet. Das Untermaterial 2 des Schuhs 15 ist mit einer Latexsohle versehen, die eine durchgehende Latexschicht 3 aus einem Latexmaterial aufweist. Die Latexsohle ist im Bereich einer Grenzschicht 4 mit dem Untermaterial 2 des Schuhs innig verbunden, indem das Latexmaterial teilweise in das Untermaterial 2 eingedrungen ist und in diesem ausgehärtet bzw. vulkanisiert ist.

Die Latexschicht 3 weist eine durch Berührung mit einer beheizten Kontaktfläche vorvulkanisierte Unterseite 5 auf, d.h. die Unterseite 5 wurde durch die Berührung mit der beheizten Kontaktfläche vulkanisiert, bevor das restliche Latexmaterial im Volumen der Latexschicht 3 vulkanisiert ist. Diese Vorvulkanisation des Latexmaterials an der Unterseite 5 hat zur Folge, daß die Unterseite 5 der Sohle eine wesentlich gleichmäßigere Oberflächenstruktur geringer Rauhigkeit aufweist, und daß eine wesentlich dickere Schicht 3 von Latexmaterial auf das Untermaterial 2 aufgebracht werden kann als beim herkömmlichen Tauchverfahren.

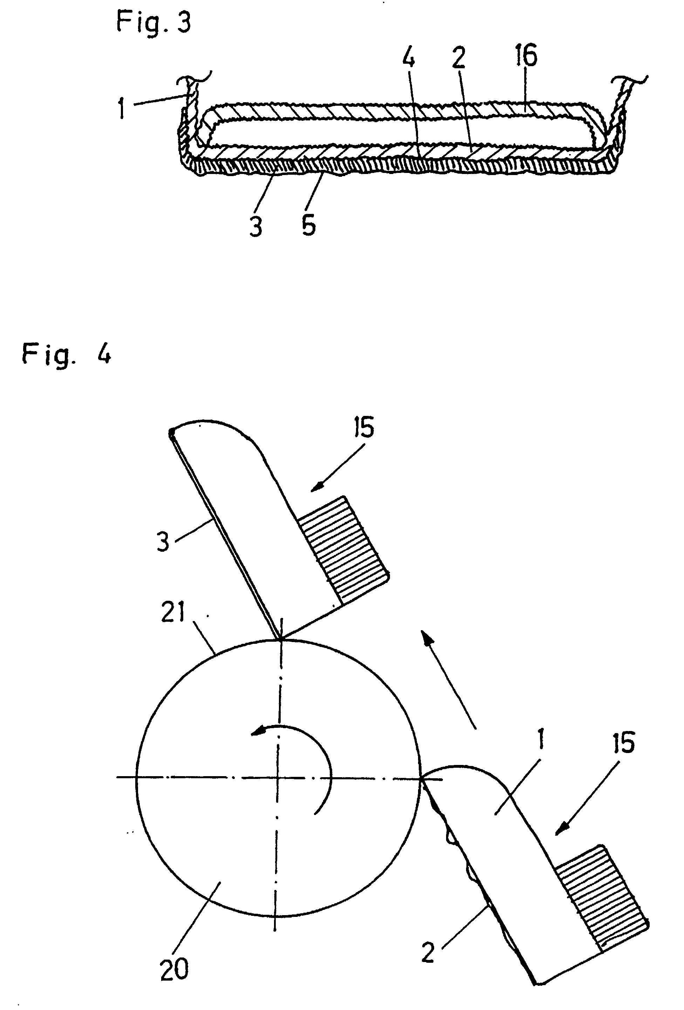

Eine Möglichkeit, eine erfindungsgemäße Latexsohle an einem Schuh 15 anzubringen, wird im folgenden anhand Fig. 4 besprochen. Bei diesem Ausführungsbeispiel wird das Untermaterial 2 des auf einen Leisten aufgespannten Schuhs 15 zunächst in ein Bad aus flüssigem Latexmaterial getaucht. Als Latexmaterial wird vorzugsweise Naturlatex verwendet, aber auch synthetischer Latex oder eine Mischung aus Naturlatex und synthetischem Latex kann verwendet werden, wobei Zusätze, insbesondere solche, die die Vulkanisierzeit und -temperatur beeinflussen, beigegeben sein können.

Nach dem Eintauchen in das Latexbad wird das überschüssige Latexmaterial abgestreift. Das mit dem Latexmaterial versehene Untermaterial 2 des Schuhs 15 wird in der Folge mit einer beheizten Kontaktfläche in Form der Oberfläche 21 einer rotierenden Walze 20 in Berührung gebracht. Der auf einem Leisten aufgespannte Schuh wird dazu über die Walze 20 abgerollt, wobei die Vorschubgeschwindigkeit des Schuhs 15 derart gewählt wird, daß es zu keiner Relativbewegung zwischen Walzenoberfläche 21 und Untermaterial 2 des Schuhs 15 kommt. Die Abrollbewegung über die Walze 20 kann dabei entlang einer Geraden oder entlang einer Kurve durchgeführt werden. Umgekehrt könnte natürlich auch die rotierende Walze über den feststehenden Schuh abgerollt werden.

Im Inneren der Walze ist eine Heizeinrichtung vorgesehen, welche die Oberfläche 21 der Walze 20 auf eine Temperatur im Bereich zwischen 50°C und 80°C, vorzugsweise etwa 60°C, beheizt.

Nach dem Abrollen hat das Latexmaterial durch die Berührung mit der beheizten Oberfläche 21 der Walze 20 eine vulkanisierte Schicht einer gewissen Dicke ausgebildet. Die Dicke dieser vorvulkanisierten Schicht hängt vom verwendeten Latexmaterial und von der Umfangsgeschwindigkeit der Walzenoberfläche 21 bzw. der Vorvulkanisierungszeit ab. Diese kann beispielsweise im Bereich zwischen 5 sec und 20 sec liegen. In einem bevorzugten Ausführungsbeispiel beträgt sie etwa 10 sec. Jedenfalls muß das Latexmaterial über der vulkanisierten Schicht noch eine flüssige Schicht aufweisen.

Anschließend wird das auf das Untermaterial 2 des Schuhs 15 aufgebrachte Latexmaterial in einer Trockenkammer duchvulkanisiert. Dabei härtet das noch flüssige Latexmaterial unter Ausbildung einer innigen Verbindung mit dem Untermaterial 2 aus. Diese Durchvulkanisationszeit, in der im wesentlichen das gesamte Latexmaterial vulkanisiert, hängt wiederum vom Latexmaterial ab, beispielsweise kann sie im Bereich zwischen 5 sec und 40 sec liegen. In einem bevorzugten Ausführungsbeispiel liegt sie bei etwa 10 sec.

Die Dicke der Latexsohle hängt von der verwendeten Latexmenge ab und liegt günstigerweise im Bereich zwischen 1 mm und 3 mm. In einem bevorzugten Ausführungsbeispiel beträgt sie etwa 2 mm. Durch die Volumskontraktion des Latexmaterials beim Vulkanisieren besitzt die Unterseite der Latexsohle auch bei einem ebenen Formboden 6 eine gewisse Struktur mit im wesentlichen gleichmäßigen kleinen Erhöhungen und Vertiefungen über die gesamte Ausdehnung der Sohle. Diese kleinen Erhöhungen und Vertiefungen selbst besitzen aber eine im wesentlichen glatte Oberfläche ohne größere Rauhigkeit.

Prinzipiell ist es denkbar und möglich, daß der Schuh, der mit der Latexsohle versehen wird, Einsätze aus einem nichttextilen Material aufweist. Diese können beispielsweise im Obermaterial des Schuhs vorgesehen sein. Es könnte prinzipiell aber auch das Untermaterial im Bereich der Sohle des Schuhs aus einem nichttextilen Material bestehen, wenn dieses eine entsprechende Porosität aufweist und flüssiges Latexmaterial aufnehmen kann, sodaß das Latexmaterial beim Aushärten eine innige Verbindung mit diesem Material eingeht.

Das textile Material des Schuhs kann als Webware oder als Maschenware ausgebildet sein. Zur Erhöhung der Dicke des Wärmeisolationsvermögens und der Widerstandsfähigkeit des textilen Materials kann dieses gewalkt sein.

## Patentansprüche

1. Verfahren zum Versehen eines Schuhs (15), der zumindest teilweise aus einem textilen Material besteht, mit einer Sohle aus Latexmaterial, wobei auf die Unterseite (2) des Schuhs (15) flüssiges, unvulkanisiertes Latexmaterial aufgebracht wird, welches zumindest teilweise in das an der Unterseite des unbesohlten Schuhs (15) vorliegende Untermaterial (2) des Schuhs (15) eindringt und in diesem unter Ausbildung einer innigen Verbindung vulkanisiert, **dadurch gekennzeichnet, daß** die Unterseite (5) des auf das Untermaterial (2) des Schuhs (15) aufgebrachten Latexmaterials (3) durch Berührung mit einer beheizten Kontaktfläche (21) nach der Aufbringung auf das Untermaterial (2) des Schuhs (15) vorvulkanisiert wird, während das Latexmaterial über der vulkanisierten Unterschicht noch eine flüssige Schicht aufweist.

2. Verfahren nach Anspruch 1, **dadurch gekennzeichnet, daß** die beheizte Kontaktfläche (21) eine Temperatur zwischen 50°C und 120°C, vorzugsweise zwischen 50°C und 80°C, und besonders bevorzugt von etwa 80°C aufweist.

3. Verfahren nach einem der Ansprüche 1 oder 2, **dadurch gekennzeichnet, daß** der Schuh (15) auf einem Leisten aufgespannt ist.

4. Verfahren nach einem der Ansprüche 1 bis 3, **dadurch gekennzeichnet, daß** vor der Vorvulkanisation der Unterseite (5) des Latexmaterials das Untermaterial (2) des Schuhs (15) in das flüssige Latexmaterial eingetaucht wird.

5. Verfahren nach Anspruch 4, **dadurch gekennzeichnet, daß** die beheizte Kontaktfläche (21) die Oberfläche einer Walze (20) ist, über die bzw. die über das mit dem flüssigen Latexmaterial versehene Untermaterial (2) des Schuhs (15) abgerollt wird, wobei die Umfangsgeschwindigkeit der Walzenoberfläche (21) vorzugsweise der Vorschubgeschwindigkeit des Schuhs (15) bzw. der Walze (20) entspricht.

6. Verfahren nach einem der Ansprüche 4 bis 5, **dadurch gekennzeichnet, daß** nach dem Eintauchen des Untermaterials (2) des Schuhs (15) in das flüssige Latexmaterial und vor der Vorvulkanisation der Unterseite (5) des Latexmaterials das überschüssige Latexmaterial abgestreift wird.

7. Verfahren nach einem der Ansprüche 4 bis 6, **dadurch gekennzeichnet, daß** das an der Unterseite (5) durch die Berührung mit der beheizten Kontaktfläche (21) vorvulkanisierte Latexmaterial in der Folge in einer Trockenkammer durchvulkanisiert wird.

8. Textiler Schuh (15), dessen Ober- und Untermaterial ein textiles Material (12) ist und dessen textiles Untermaterial (2) mit einem Latexmaterial versehen ist, welches teilweise in das textile Untermaterial (2) des Schuhs (15) eingedrungen ist und in diesem unter Ausbildung einer innigen Verbindung vulkanisiert ist, **dadurch gekennzeichnet, daß** der Schuh (15) eine einschichtige Latexsohle mit einer durchgehenden, an ihrer Unterseite (5) durch Berührung mit einer beheizten Oberfläche (21) einer Walze (20) vorvulkanisierten Latexschicht (3) aufweist.

9. Schuh nach Anspruch 8, **dadurch gekennzeichnet, daß** die Dicke des Latexmaterials der Latexschicht (3) im Bereich zwischen 1 mm und 3 mm, vorzugsweise bei etwa 2 mm liegt.

10. Schuh nach einem der Ansprüche 8 oder 9, **dadurch gekennzeichnet, daß** die Unterseite (5) der Sohle mit einem Profil versehen ist.

11. Schuh nach einem der Ansprüche 8 bis 10, **dadurch gekennzeichnet, daß** das Latexmaterial aus Naturlatex besteht.

12. Schuh nach einem der Ansprüche 8 bis 11, **dadurch gekennzeichnet, daß** der Schuh (15) ein Hausschuh ist.

## Claims

1. A method of providing a shoe (15) which at least partially comprises a textile material with a sole of latex material, wherein applied to the underside (2) of the shoe (15) is liquid non-vulcanised latex material which at least partially penetrates into the underneath material (2) of the shoe (15), which is at the underside of the unsoled shoe (15), and is vulcanised in said underneath material, forming an intimate join, **characterised in that** the underside (5) of the latex material (3) applied to the underneath material (2) of the shoe (15) is pre-vulcanised by contact with a heated contact surface (21) after application to the underneath material (2) of the shoe (15) while the latex material still has over the vulcanised underneath layer a liquid layer.

2. A method according to claim 1 **characterised in that** the heated contact surface (21) is at a temperature of between 50°C and 120°C, preferably between 50°C and 80°C, and particularly preferably at about 60°C.

3. A method according to one of claims 1 and 2 **characterised in that** the shoe is clamped on a last.

4. A method according to one of claims 1 to 3 **characterised in that** prior to pre-vulcanisation of the underside (5) of the latex material the underneath material (2) of the shoe (15) is dipped into the liquid latex material.

5. A method according to claim 4 **characterised in that** the heated contact surface (21) is the surface of a roller (20) over which is rolled or which is rolled over the underneath material (2) of the shoe (15), which underneath material is provided with the liquid latex material, wherein the peripheral speed of the roller surface (21) preferably corresponds to the advance speed of the shoe (15) or the roller (20).

6. A method according to one of claims 4 and 5 **characterised in that** after the underneath material (2) of the shoe (15) has been dipped into the liquid latex material and prior to pre-vulcanisation of the underside (5) of the latex material the excess latex material is stripped off.

7. A method according to one of claims 4 to 6 **characterised in that** the latex material which is pre-vulcanised at the underside (5) by contact with the heated contact surface (21) is subsequently completely vulcanised in a drying chamber.

8. A textile shoe (15) whose upper and underneath material is a textile material (12) and whose textile underneath material (2) is provided with a latex material which has partially penetrated into the textile underneath material (2) of the shoe (15) and vulcanised therein, forming an intimate join, **characterised in that** the shoe (15) has a single-layer latex sole with a continuous latex layer (3) which is pre-vulcanised at the underside (5) of the latex sole by contact with a heated surface (21) of a roller (20).

9. A shoe according to claim 8 **characterised in that** the thickness of the latex material of the latex layer (3) is in the region of between 1 mm and 3 mm, preferably being about 2 mm.

10. A shoe according to one of claims 8 and 9 **characterised in that** the underside (5) of the shoe is provided with a pattern.

11. A shoe according to one of claims 8 to 10 **characterised in that** the latex material comprises natural latex.

12. A shoe according to one of claims 8 to 11 **characterised in that** the shoe (15) is a slipper.

## Revendications

1. Procédé pour le revêtement d'une chaussure (15) qui est composée au moins partiellement d'une matière textile, avec une semelle en latex, dans lequel du latex liquide, non vulcanisé est appliqué sur le côté inférieur (2) de la chaussure (15), lequel pénètre au moins partiellement dans la matière inférieure (2) de la chaussure (15) présente sur le côté inférieur de la chaussure sans semelle (15) et est vulcanisé dans celui-ci en formant une liaison intime, **caractérisé en ce que** le côté inférieur (5) du latex (3) appliqué sur la matière inférieure (2) de la chaussure (15) est pré-vulcanisé par contact avec une surface de contact chauffée (21) après l'application sur la matière inférieure (2) de la chaussure (15), alors que le latex présente encore une couche liquide par-dessus la sous-couche vulcanisée.

2. Procédé selon la revendication 1, **caractérisé en ce que** la surface de contact chauffée (21) présente une température située entre 50°C et 120°C, de préférence entre 50°C et 80°C, et de préférence encore de 60°C environ.

3. Procédé selon l'une des revendications 1 ou 2, **caractérisé en ce que** la chaussure (15) est fixée sur un embauchoir.

4. Procédé selon l'une des revendications 1 à 3, **caractérisé en ce qu'**avant la pré-vulcanisation du côté inférieur (5) du latex, la matière inférieure (2) de la chaussure (15) est immergée dans le latex liquide.

5. Procédé selon la revendication 4, **caractérisé en ce que** la surface de contact chauffée (21) est la surface d'un cylindre (20), qui est déroulé sur la matière inférieure (2), revêtue du latex liquide, de la chaussure (15) ou sur lequel ladite matière inférieure (2) est déroulée, la vitesse périphérique de la surface du cylindre (21) correspondant de préférence à la vitesse d'avancement de la chaussure (15) resp. du cylindre (20).

6. Procédé selon l'une des revendications 4 à 5, **caractérisé en ce qu'**après immersion de la matière inférieure (2) de la chaussure (15) dans le latex liquide et avant la pré-vulcanisation du côté inférieur (5) du latex, l'excédent de latex est enlevé.

7. Procédé selon l'une des revendications 4 à 6, **caractérisé en ce que** sur le côté inférieur (5) le latex pré-vulcanisé par le contact avec la surface de contact chauffée (21) est par la suite vulcanisé complètement dans une chambre de séchage.

8. Chaussure textile (15) dont la matière supérieure et inférieure est une matière textile (12) et dont la matière inférieure textile (2) est revêtue d'un latex, lequel pénètre partiellement dans la matière inférieure textile (2) de la chaussure (15) et est vulcanisé dans celle-ci en formant une liaison intime, **caractérisée en ce que** la chaussure (15) présente une semelle en latex mono-couche avec une couche de latex continue, pré-vulcanisée (3) sur son côté inférieur (5) par contact avec une surface chauffée (21) d'un cylindre (20).

9. Chaussure selon la revendication 8, **caractérisée en ce que** l'épaisseur du latex de la couche en latex (3) est de l'ordre de 1 mm à 3 mm, de préférence de 2 mm environ.

10. Chaussure selon l'une des revendications 8 ou 9, **caractérisée en ce que** le côté inférieur (5) de la semelle est doté d'un profil.

11. Chaussure selon l'une des revendications 8 à 10, **caractérisée en ce que** le latex est composé de latex naturel.

12. Chaussure selon l'une des revendications 8 à 11, **caractérisée en ce que** la chaussure (15) est une pantoufle.
